# EUROPEAN PATENT SPECIFICATION

(11) **EP 4 582 894 B1**
(45) Date of publication and mention of the grant of the patent: **08.07.2026**
(21) Application number: 24208283.2
(22) Date of filing: 23.10.2024
(51) Int. Cl.: G05D 1/24, G05D 1/245, G05D 1/648, G05D 105/15, G05D 107/20, G05D 109/10, G05D 1/248

(54) **A ROBOTIC MOWER AND A METHOD FOR NAVIGATING THE SAME**
ROBOTISCHER MÄHER UND VERFAHREN ZUR NAVIGATION DAVON
TONDEUSE ROBOTIQUE ET SON PROCÉDÉ DE NAVIGATION

(30) Priority: 24.10.2023 WO PCT/CN2023/126061
(43) Date of publication of application: 09.07.2025
(73) Proprietor: Greenworks (Jiangsu) Co., Ltd, Changzhou, Jiangsu 213023 (CN)
(72) Inventor: LUNDKVIST, André, 566 36 Habo (SE); MUSTEDANAGIC, Amir, 561 35 Huskvarna (SE)
(74) Representative: Bergenstråhle & Partners AB

(56) References cited:
- US-A- 5 944 132
- US-A1- 2022 124 973

## Description

### Technical field

The present invention relates generally to a robotic mower for performing navigation and a method for navigating the robotic mower. The present invention also relates to a computer program implementing the method.

### Background art

Self-propelled robotic mowers have become more and more popular and are now widely used to cut grass within a predetermined work area. The work area is typically limited by boundary wires to ensure that the robotic mower does not move outside the work area and in order to prevent that the robotic mower, objects or living beings get damaged or injured. In newer versions of robotic mowers there are no longer any need for boundary wires. Instead, the robotic mower is provided with a positioning unit used to determine the position of the robotic mower and the robotic mower is allowed to move within a boundary of a predefined work area. If the position obtained by the positioning unit cannot be reliably obtained the robotic mower is stopped as a safety measure.

Another example of such a robotic mower is described in US 2022/0124973 A1, which discloses a method for navigating a robotic mower within a work area by, based on a determined position estimating a boundary distance value and setting a maximum dead reckoning navigation distance based on the boundary distance value. If a new position cannot be reliable obtained, the navigating continues based on dead reckoning and if no new position within the area has been reliably obtained upon reaching a maximum dead reckoning navigation distance, a safety operation is executed based on that the maximum dead reckoning navigation distance is reached. Even if the solution in US 2022/0124973 A1 handles the problem of keeping the mower within a work area, no solution is presented for how to more accurate and robust navigate the robotic mower close to a boundary.

Thus, there is a need for a more accurate and robust solution for navigating the robotic mower when there is uncertainty in determining the position of the robotic mower.

### Summary of invention

An objective of the present invention is to accomplish a more accurate and robust navigation for a robotic mower when there is an uncertainty in determining the position with a positioning unit.

According to an aspect of the invention a method for navigating a robotic mower within a work area is disclosed. The work area is limited by a boundary and the method comprises, repeatedly determining a position of the robotic mower by means of a positioning unit provided in or arranged on the robotic mower, navigating the robotic mower within the work area based on the determined position, determining that a new position of the robotic mower cannot be accurately obtained, determining a position uncertainty distance based on the positions obtained by the positioning unit and a dead reckoning sensor provided in the robotic mower, calculating a distance to the closest boundary, determining a navigation margin as the difference between the distance to the closest boundary and the position uncertainty distance, and executing a safety operation if the navigation margin equals a predetermined value.

According to the invention, the method further comprises the steps of generating a trajectory of the positions determined by the positioning unit while the robotic mower navigates, generating a trajectory of the positions determined by the dead reckoning sensor while the robotic mower navigates, aligning by moving at least one of the generated trajectories within a 2D or 3D coordinate system for minimisation of the distance between the trajectories resulting in aligned trajectories, calculating a metric of difference between the aligned trajectories for quantifying the alignment quality of the aligned trajectories, and determining the position uncertainty distance as the metric of difference between the aligned trajectories.

In yet another embodiment the position determined by the positioning unit is determined by using any one of **R**eal-**T**ime **K**inematic, RTK, **G**lobal **P**ositioning **S**ystem, GPS, and **D**ifferential **G**lobal **N**avigation **S**atellite **S**ystems, DGNSS, or any combination thereof.

In another embodiment of the method further comprises repeatedly determining a position of an RTK base station with a positioning unit provided in the RTK base station, and wherein determining the position of the RTK base station with the positioning unit is performed with a fixed time interval of between 5 to 15 seconds.

In yet another embodiment of the method the determining of the position of the robotic mower with the positioning unit and the dead reckoning sensor is performed with a fixed frequency of 8 to 12 Hz, preferably with a fixed frequency of 10 Hz.

In one embodiment of the method executing the safety operation comprises any one of, stopping the robotic mower to move, stopping the robotic mower to move more than a robotic mower length outside the boundary, and reversing or turning the robotic mower for navigating the robotic mower in the direction from the boundary, or any combination thereof.

In yet another embodiment of the method the distance to the closest boundary is the distance between the position determined by the positioning unit and any one of, the substantially closest point on the closest boundary, the substantially closest point on the closest boundary in the mowing direction of the robotic mower, and the substantially closest point on the closest boundary that the robotic mower risks traversing based on a preplanned trajectory, or any combination thereof.

According to another aspect of the invention a robotic mower for performing navigating within a work area is disclosed. The work area is limited by a boundary and the robotic mower comprises a positioning unit, a dead reckoning sensor, a controller comprising a processor and a memory, wherein the memory comprises instructions which when executed by the processer causes the mower to: repeatedly determine a position of the robotic mower by means of the positioning unit, navigate the robotic mower within the work area based on the determined position, determine that a new position of the robotic mower cannot be accurately obtained, determine a position uncertainty distance based on the positions obtained by the positioning unit and the dead reckoning sensor, calculate a distance to the closest boundary, determine a navigation margin as the difference between the distance to the closest boundary and the position uncertainty distance, and execute a safety operation if the navigation margin equals a predetermined value.

According to the invention, the robotic mower is further configured to generate a trajectory of the positions determined by the positioning unit while the robotic mower navigates, generate a trajectory of the positions determined by the dead reckoning sensor while the robotic mower navigates, align by moving at least one of the generated trajectories within a 2D or 3D coordinate system for minimisation of the distance between the trajectories resulting in aligned trajectories, calculate a metric of difference between the aligned trajectories for quantifying the alignment quality of the aligned trajectories, and determine the position uncertainty distance as the metric of difference between the aligned trajectories.

In yet another embodiment the positioning unit is any one of a **R**eal-**T**ime **K**inematic, RTK, positioning unit, a **G**lobal **P**ositioning **S**ystem, GPS, positioning unit and a **D**ifferential **G**lobal **N**avigation **S**atellite **S**ystems, DGNSS, positioning unit or any combination thereof.

In an embodiment the robotic mower is further configured to repeatedly determine, with a fixed time interval of between 5 to 15 seconds, a position of an RTK base station with a positioning unit provided in the RTK base station.

In another embodiment the robotic mower is further configured to determine the position of the robotic mower with the positioning unit and the dead reckoning sensor using a fixed frequency of 8 to 12 Hz, preferably using a fixed frequency of 10 Hz.

In yet another embodiment the robotic mower is further configured to execute the safety operation according to any one of stopping the robotic mower to move, stopping the robotic mower to move more than a robotic mower length outside the boundary, and reversing or turning the robotic mower for navigating the robotic mower in the direction from the boundary or any combination thereof.

In another embodiment the distance to the closest boundary is the distance between the position determined by the positioning unit and any one of the substantially closest point on the closest boundary, the substantially closest point on the closest boundary in the mowing direction of the robotic mower, and the substantially closest point on the closest boundary that the robotic mower risks traversing based on a preplanned trajectory or any combination thereof.

According to another aspect of the invention a computer program is disclosed, comprising computer program code, wherein the computer program code is adapted, if executed by the processer of the controller, to implement the methods described above.

Thus, by determining a position uncertainty distance and using this information and the distance to the boundary a safe and reliable navigation of the robotic mower is executed.

Furthermore, by using information from both the positioning unit and the dead reckoning sensor when determining the position uncertainty distance it is possible to achieve a more accurate and robust navigation for the robotic mower, which in the end also leads to a more efficient mowing process.

Moving at least one of the generated trajectories may be conducted by rotating and/or translating at least one of the generated trajectories within said 2D or 3D coordinate system.

Three examples of common methods, among others, for calculating the metric of difference and the minimisation of the distance between the trajectories are root mean square error, using the maximum distance between any of the corresponding pairs of the positions determined by the positioning unit and the dead reckoning sensor respectively, and using the distance between the last corresponding pair of the positions determined by the positioning unit and the dead reckoning sensor respectively.

### Brief description of drawings

The invention will now be described, by way of example, with reference to the accompanying drawings, in which:
Fig. 1 is a schematic view of a work area, wherein the robotic mower is clearly inside the boundaries of the work area,
Fig. 2 is a schematic view of a work area, wherein the robotic mower is close to the boundary of the work area,
Fig. 3a and 3b are illustrations describing features of an embodiment of the method according to the present invention,
Fig. 4 is a flow chart showing the method according to the present invention, and
Fig. 5 is a flow chart showing the method according to an embodiment of the present invention, and
Fig. 6 is schematic view of the robotic mower, comprising a controller, a positioning unit and a dead reckoning sensor.

### Description of embodiments

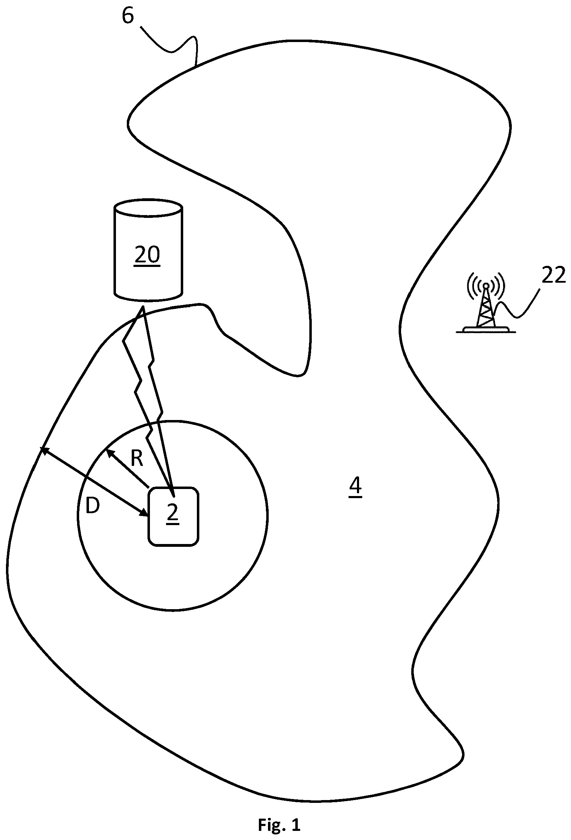

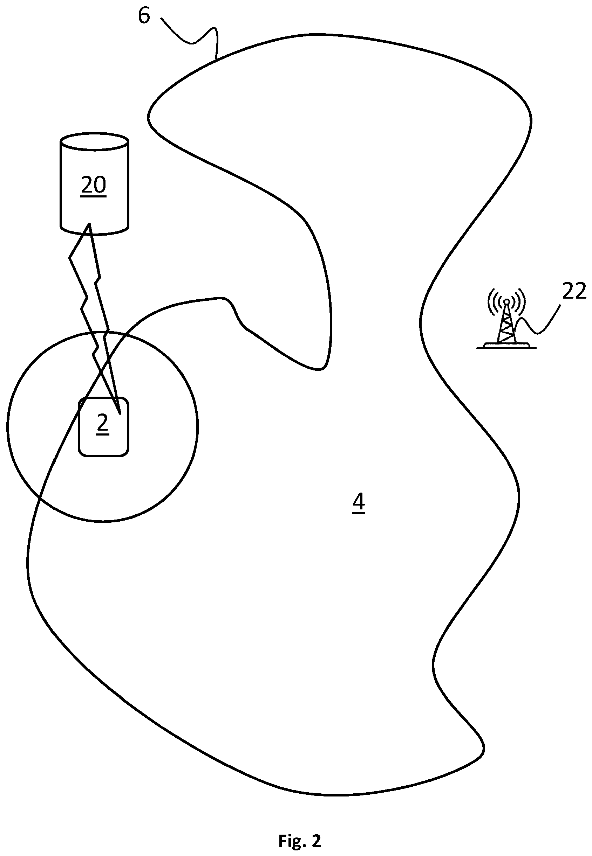

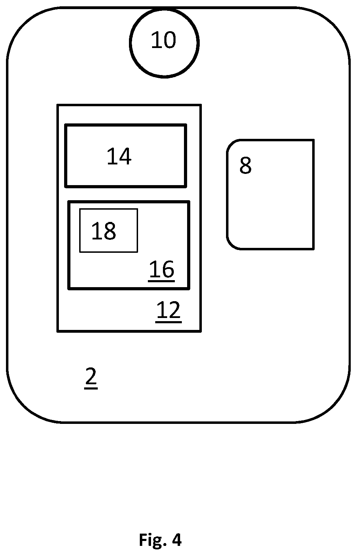

**Fig.1** and **Fig. 2** show a schematic over of a robotic mower 2 operating in a work area 4, which is delimited by a boundary 6. The robotic mower 2, see **Fig. 4****,** comprises a positioning unit 8, a dead reckoning sensor 10 and a controller 12 comprising a processor 14 and a memory 16. The robotic mower 2 also comprises one or motors, wheels and cutting tools, which all are known in the art and will therefore not be described any further. One motor may be used to propel the robotic mower 2 and another motor may be used to drive the cutting tool. The robotic mower 2 is controlled by the controller 12 which is connected to the positioning unit 8, the dead reckoning sensor 10, other sensors where applicable, actuators, and different communication interfaces to control the robotic mower 2. The processer 14 may be any device capable to execute instructions stored in the memory 16. Different combinations of general and specific application integrated circuits may be used to realise the controller.

The positioning unit 8 may use any wireless technique to the determine the position of the robotic mower 2, but is preferably a **R**eal-**T**ime **K**inematic, RTK, unit, a **G**lobal **P**ositioning **S**ystem, GPS, unit, or a **D**ifferential **G**lobal **N**avigation **S**atellite **S**ystems, DGNSS, unit or any suitable combination thereof.

In the vicinity to the work area 4, there is also an RTK base station 22 provided with a positioning unit for determining the position of the RTK base station 22. As is well known in the art the RTK base station 22 can communicate wirelessly with the positioning unit 8 provided in the robotic mower 2 for communication of information there in between, such as information about the position of the RTK base station to the robotic mower 2. The robotic mower may also be able to communicate wirelessly with an external database 20. Such a database 20 can be provided as a cloud service or provided in a server connected to the RTK base station 22.

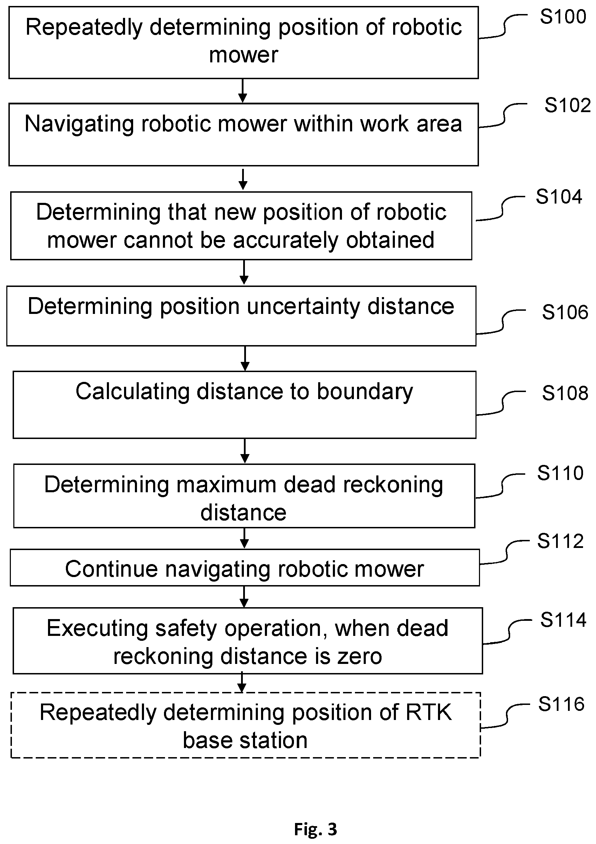

**Fig. 3a** shows the generated trajectory X of the positions pp1 to pp7 determined by the positioning unit 8 while the robotic mower 2 navigates. It also shows the generated trajectory Y of the positions pd1 to pd7 determined by the dead reckoning sensor 10 while the robotic mower 2 navigates.

**Fig. 3b** shows the aligned trajectories X, Y' when an alignment by moving the generated trajectory Y within a 2D or 3D coordinate system for minimisation of the distance between the trajectories X, Y have been made. Subsequently after this a calculation of a metric of difference MOD between the aligned trajectories X, Y' for quantifying the alignment quality of the aligned trajectories X, Y' is made. Finally, a determination of the position uncertainty distance R as the metric of difference MOD between the aligned trajectories X, Y' is made. An alignment of the trajectories X, Y can also be made by moving the generated trajectory X, or by moving the generated trajectories X and Y.

Turning now to **Fig. 4****,** a method for navigating the robotic mower 2 within the work area 4 will be described. As mentioned above the work area 4 is limited by the boundary 6. In step S100 of the method the position of the robotic mower 2 is repeatedly determined by means of the positioning unit 8. The positioning unit 8 may use any wireless technique to the determine the position of the robotic mower 2. The position is as mentioned above repeatedly determined, i.e. more or less continuously determined. In an embodiment the positioning unit 8 determines the position of the robotic mower 2 with a fixed frequency, such as a fixed frequency of 8 to 12 Hz, preferably with a fixed frequency of 10 Hz.

In step S102 the robotic mower 2 is navigated within the work area 4 based on the determined position. In step S104 it is determined that a new position of the robotic mower 2 cannot be accurately obtained. There can be many reasons that the position cannot be accurately obtained. For example, the RTK, GPS or DGNSS coverage may be poor due to trees or other obstacles blocking the wireless signal or the wireless signal quality is poor. Thus, if the controller 12 in the robotic mower 2 determines in step S104 that the position cannot be obtained accurately enough a position uncertainty distance R is calculated in step S106. The decision that the position is not accurate enough may be based on different thresholds for the signals received by the positioning unit 8, which is believed to be known to a person skilled in the art.

In step S106 the position uncertainty distance R is determined by the controller 12 based on both the positions obtained by the positioning unit 8 and the positions obtained by the dead reckoning sensor 10.

The position uncertainty distance R can be seen in Fig. 1 surrounding the robotic mower 2 as a circle having the radius R. This means that the robotic mower 2 is not necessarily at the indicated position in Fig. 1 and Fig. 2, but somewhere within the circle. In Fig. 1 this is not a problem, since the entire circle is within the boundary 6, which means that also the robotic mower 2 for sure is within the boundary 6. In Fig. 2, part of the circle is outside the boundary 6, which means that also the robotic mower 2 potentially may be outside the work area 4. Due to safety reasons, it is important that the robotic mower 2 does not leave the work area 4, or at least not with more than a robotic mower length outside the boundary, or at least not with more than what any applicable robot standard stipulates.

The determination of the position uncertainty distance R in step S106 is based on the positions obtained by the positioning unit 8 and the dead reckoning sensor 10 provided in the robotic mower 2.

The position uncertainty distance R in step S106 may be calculated using different methods. **In Fig. 5,** an embodiment of one such method is disclosed. In step S106.1 a trajectory X is generated of the positions pp1..n determined by the positioning unit 8 while the robotic mower 2 navigates. Furthermore in step S106.2 a trajectory Y of the positions pd1..n determined by the dead reckoning sensor 10 is generated while the robotic mower 2 navigates. An alignment is conducted in step S106.3 by moving at least one of the generated trajectories X, Y within a 2D or 3D coordinate system for minimisation of the distance between the trajectories X, Y resulting in aligned trajectories X, Y'. In step S106.4 a calculation of a metric of difference MOD between the aligned trajectories X, Y' is conducted for quantifying the alignment quality of the aligned trajectories X, Y'. Finally in step S106.5 the position uncertainty distance R is determined as the metric of difference MOD between the aligned trajectories X, Y'.

The positions obtained by the dead reckoning sensor 10 is as the positioning unit 8 also made repeatedly, and may be made with the same frequency as the positioning unit 8. The dead reckoning sensor 10 may determine the position of the robotic mower 2 with a fixed frequency of 8 to 12 Hz. The dead reckoning sensor 10 may also determine the position of the robotic mower 2 with a fixed frequency of 10 Hz.

In step S108 a distance D to the closest boundary is calculated. The distance D to the closest boundary 6 may be the distance between the position determined by the positioning unit 8 and any one of the substantially closest point on the closest boundary 6, the substantially closest point on the closest boundary 6 in the mowing direction of the robotic mower 2, and the substantially closest point on the closest boundary 6 that the robotic mower 2 risks traversing based on a preplanned trajectory or any combination thereof.

In step S110 a navigation margin is determined as the difference between the distance D to the closest boundary 6 and the position uncertainty distance R. The navigation margin, D-R, is to be understood as the maximum distance the robotic mower 2 can travel when it has been determined that a new position of the robotic mower 2 cannot be accurately obtained, taking the distance to the boundary and the position uncertainty distance into account.

In step S112 a safety operation is executed if the navigation margin, D-R, equals the predetermined value and no accurate position can be obtained by the positioning unit 8. The robotic mower 2 continues to navigate until the navigation margin, D-R, equals the predetermined value and no accurate position can be obtained by the positioning unit 8 or a new position from the positioning unit 8 can be accurately obtained. If a new position from the positioning unit 8 can be accurately obtained the operation of the robotic mower 2 can be continued since the robotic mower 2 with the accurately obtained position safely can be controlled within the work area 4.

The execution of the safety operation may be done in different ways. In one embodiment executing the safety operation comprises to either stop the robotic mower 2 to move, to stop the robotic mower 2 to move more than a robotic mower 2 length outside the boundary, or to reverse or turn the robotic mower 2 for navigating the robotic mower 2 in the direction from the boundary 6. These three safety operations could be combined in any way.

To further increase the accuracy in determining the position of the robotic mower 2, the position data of the RTK base station 22 can be used to determine the accuracy of the position obtained by the positioning unit 8 in the robotic mower. Thus, the controller 12 of the robotic mower 2 may in an optional step, S114, repeatedly determine the position of the RTK base station 22 by requesting this information from the RTK base station 22. This time interval for such requests is preferably once every 5 to 15 seconds, and most preferably once every 10 seconds.

The present invention relates to a robotic mower that performs the methods described above, i.e. navigating within a work area 4, wherein the work area 4 is limited by a boundary 6. The robotic mower 2 comprising a positioning unit 8, a dead reckoning sensor 10, a controller 12 comprising a processor 14 and a memory 16, the memory 16 comprising instructions which when executed by the processer 14 causes the mower to: repeatedly determine a position of the robotic mower 2 by means of the positioning unit 8, navigate the robotic mower 2 within the work area 4 based on the determined position, determine that a new position of the robotic mower 2 cannot be accurately obtained, determine a position uncertainty distance R based on the positions obtained by the positioning unit 8 and the dead reckoning sensor 10, calculate a distance D to the closest boundary 6, determine a navigation margin as the difference between the distance D to the closest boundary 6 and the position uncertainty distance R, and execute a safety operation if the navigation margin equals a predetermined value.

The method executes a safety operation if the navigation margin equals a predetermined value, otherwise it may continue navigating the robotic mower.

The predetermined value could equal zero. It could also equal any positive value, which would result in the robotic mower 2 keeping a safety distance to the boundary 6. It could also equal any negative value, which would imply that the robotic mower 2 would surpass the boundary 6.

Furthermore, the robotic mower 2 is also configured to perform all of the different embodiments of the method for navigating the robotic mower 2 as they have been described above and are therefore not repeated again.

The present invention also relates to a computer program 18, see Fig. 6, comprising computer program code, and wherein the computer program code being adapted, if executed by the processer 14 of the controller 12, to implement the method and the different embodiments thereof for navigating the robotic mower 2 as have been described above.

## Claims

1. A method for navigating a robotic mower (2) within a work area (4), wherein the work area (4) is limited by a boundary (6), the method comprising,
repeatedly determining (S100) a position of the robotic mower (2) by means of a positioning unit (8) provided in or arranged on the robotic mower (2),
navigating (S102) the robotic mower (2) within the work area (4) based on the determined position,
determining (S104) that a new position of the robotic mower (2) cannot be accurately obtained,
determining (S106) a position uncertainty distance (R) based on the positions obtained by the positioning unit (8) and a dead reckoning sensor (10) provided in the robotic mower (2),
calculating (S108) a distance (D) to the closest boundary (6),
determining (S110) a navigation margin as the difference between the distance (D) to the closest boundary (6) and the position uncertainty distance (R), and
executing (S112) a safety operation if the navigation margin equals a predetermined value **characterised**
**in that** the method further comprises the steps of:
- generating (S106.1) a trajectory (X) of the positions (pp1..n) determined by the positioning unit (8) while the robotic mower (2) navigates,
- generating (S106.2) a trajectory (Y) of the positions (pd1..n) determined by the dead reckoning sensor (10) while the robotic mower (2) navigates,
- aligning (S106.3) by moving at least one of the generated trajectories (X, Y) within a 2D or 3D coordinate system for minimisation of the distance between the trajectories (X, Y) resulting in aligned trajectories (X, Y'),
- calculating (S106.4) a metric of difference (MOD) between the aligned trajectories (X, Y') for quantifying the alignment quality of the aligned trajectories (X, Y'), and
- determining (S106.5) the position uncertainty distance (R) as the metric of difference (MOD) between the aligned trajectories (X, Y').

2. The method according to claim 1, wherein the position determined by the positioning unit (8) is determined by using any one of **R**eal-**T**ime **K**inematic, RTK, **G**lobal **P**ositioning **S**ystem, GPS, and **D**ifferential **G**lobal **N**avigation **S**atellite **S**ystems, DGNSS, or any combination thereof.

3. The method according to any one of previous claims, further comprising repeatedly determining (S114) a position of an RTK base station (22) with a positioning unit provided in the RTK base station (22), and wherein determining (S114) the position of the RTK base station (22) with the positioning unit is performed with a fixed time interval of between 5 to 15 seconds.

4. The method according to any one of the previous claims, wherein determining (S100) the position of the robotic mower (2) with the positioning unit (8) and the dead reckoning sensor (10) is performed with a fixed frequency of 8 to 12 Hz, preferably with a fixed frequency of 10 Hz.

5. The method according to any one of the previous claims, wherein executing (S112) the safety operation comprises any one of
stopping the robotic mower (2) to move,
stopping the robotic mower (2) to move more than a robotic mower (2) length outside the boundary, and
reversing or turning the robotic mower (2) for navigating the robotic mower (2) in the direction from the boundary (6)
or any combination thereof.

6. The method according to any one of the previous claims,
wherein the distance (D) to the closest boundary (6) is the distance between the position determined by the positioning unit (8) and any one of the substantially closest point on the closest boundary (6),
the substantially closest point on the closest boundary (6) in the mowing direction of the robotic mower (2), and
the substantially closest point on the closest boundary (6) that the robotic mower (2) risks traversing based on a preplanned trajectory
or any combination thereof.

7. A robotic mower (2) for performing navigating within a work area (4), wherein the work area (4) is limited by a boundary (6), the robotic mower (2) comprising a positioning unit (8), a dead reckoning sensor (10), a controller (12) comprising a processor (14) and a memory (16), the memory (16) comprising instructions which when executed by the processer (14) causes the mower to:
repeatedly determine a position of the robotic mower (2) by means of the positioning unit (8),
navigate the robotic mower (2) within the work area (4) based on the determined position,
determine that a new position of the robotic mower (2) cannot be accurately obtained,
determine a position uncertainty distance (R) based on the positions obtained by the positioning unit (8) and the dead reckoning sensor (10),
calculate a distance (D) to the closest boundary (6),
determine a navigation margin as the difference between the distance (D) to the closest boundary (6) and the position uncertainty distance (R), and
execute a safety operation if the navigation margin equals a predetermined value, **characterised in that** the robotic mower (2) is further
configured to:
- generate a trajectory (X) of the positions (pp1..n) determined by the positioning unit (8) while the robotic mower (2) navigates,
- generate a trajectory (Y) of the positions (pd1..n) determined by the dead reckoning sensor (10) while the robotic mower (2) navigates,
- align by moving at least one of the generated trajectories (X, Y) within a 2D or 3D coordinate system for minimisation of the distance between the trajectories (X, Y) resulting in aligned trajectories (X, Y'),
- calculate a metric of difference (MOD) between the aligned trajectories (X, Y') for quantifying the alignment quality of the aligned trajectories (X, Y'), and
- determine the position uncertainty distance (R) as the metric of difference (MOD) between the aligned trajectories (X, Y').

8. The robotic mower (2) according to claim 7, wherein the positioning unit (8) is any one of a **R**eal-**T**ime **K**inematic, RTK, positioning unit, a **G**lobal **P**ositioning **S**ystem, GPS, positioning unit and a **D**ifferential **G**lobal **N**avigation **S**atellite **S**ystems, DGNSS, positioning unit or any combination thereof.

9. The robotic mower (2) according to any one of claims 7 to 8, wherein the robotic mower (2) is further configured to:
repeatedly determine, with a fixed time interval between 5 to 15 seconds, a position of a RTK base station (22) with a positioning unit provided in the RTK base station (22).

10. The robotic mower (2) according to any one of claims 7 to 9, wherein the robotic mower (2) is further configured to:
determine the positions of the robotic mower (2) with the positioning unit (8) and the dead reckoning sensor (10) with a fixed frequency of 8 to 12 Hz, preferably with a fixed frequency of 10 Hz.

11. The robotic mower (2) according to any one of claims 7 to 10, wherein the robotic mower (2) is further configured to execute the safety operation according to any one of
stopping the robotic mower (2) to move,
stopping the robotic mower (2) to move more than a robotic mower (2) length outside the boundary, and
reversing or turning the robotic mower (2) for navigating the robotic mower (2) in the direction from the boundary (6)
or any combination thereof.

12. The robotic mower (2) according to any one of claims 7 to 11, wherein the distance (D) to the closest boundary (6) is the distance between the position determined by the positioning unit (8) and any one of
the substantially closest point on the closest boundary (6),
the substantially closest point on the closest boundary (6) in the mowing direction of the robotic mower (2), and
the substantially closest point on the closest boundary (6) that the robotic mower (2) risks traversing based on a preplanned trajectory
or any combination thereof.

13. A computer program (18) comprising computer program code, the computer program code being adapted, if executed by the processer (14) of the controller (12), to implement the method according to any one of claims 1 to 6.

## Patentansprüche

1. Verfahren zum Navigieren eines Mähroboters (2) innerhalb eines Arbeitsbereichs (4), wobei der Arbeitsbereich (4) durch eine Begrenzung (6) begrenzt ist, das Verfahren umfassend,
wiederholtes Bestimmen (S100) einer Position des Mähroboters (2) mittels einer in dem Mähroboter (2) vorgesehenen oder an diesem angeordneten Positionierungseinheit (8),
Navigieren (S102) des Mähroboters (2) innerhalb des Arbeitsbereichs (4), basierend auf der bestimmten Position,
Bestimmen (S104), dass eine neue Position des Mähroboters (2) nicht genau erhalten werden kann,
Bestimmen (S106) eines Positionsunsicherheitsabstands (R), basierend auf den von der Positionierungseinheit (8) und einem in dem Mähroboter (2) vorgesehenen Koppelnavigationssensor (10) erhaltenen Positionen,
Berechnen (S108) eines Abstands (D) zu der nächstgelegenen Begrenzung (6),
Bestimmen (S110) einer Navigationsmarge als der Differenz zwischen dem Abstand (D) zu der nächstgelegenen Begrenzung (6) und dem Positionsunsicherheitsabstand (R), und
Ausführen (S112) eines Sicherheitsvorgangs, wenn die Navigationsmarge einem vorgegebenen Wert entspricht, **dadurch gekennzeichnet, dass** das Verfahren weiter die Schritte umfasst:
- Erzeugen (S106.1) einer Trajektorie (X) der von der Positionierungseinheit (8) bestimmten Positionen (pp1..n), während der Mähroboter (2) navigiert,
- Erzeugen (S106.2) einer Trajektorie (Y) der von dem Koppelnavigationssensor (10) bestimmten Positionen (pd1..n), während der Mähroboter (2) navigiert,
- Ausrichten (S106.3) durch Bewegen mindestens einer der erzeugten Trajektorien (X, Y) innerhalb eines 2D- oder 3D-Koordinatensystems zur Minimierung des Abstands zwischen den Trajektorien (X, Y), was zu ausgerichteten Trajektorien (X, Y') führt,
- Berechnen (S106.4) einer Differenzmetrik (MOD) zwischen den ausgerichteten Trajektorien (X, Y') zum Quantifizieren der Ausrichtungsqualität der ausgerichteten Trajektorien (X, Y'), und
- Bestimmen (S106.5) des Positionsunsicherheitsabstands (R) als die Differenzmetrik (MOD) zwischen den ausgerichteten Trajektorien (X, Y').

2. Verfahren nach Anspruch 1, wobei die von der Positionierungseinheit (8) bestimmte Position unter Verwendung von einem von **R**eal-**T**ime **K**inematic, RTK, **G**lobal **P**ositioning **S**ystem, GPS, und **D**ifferential **G**lobal **N**avigation **S**atellite **S**ystems, DGNSS, oder einer beliebigen Kombination davon bestimmt wird.

3. Verfahren nach einem der vorstehenden Ansprüche, weiter umfassend wiederholtes Bestimmen (S114) einer Position einer RTK-Basisstation (22) mit einer in der RTK-Basisstation (22) vorgesehenen Positionierungseinheit, und wobei das Bestimmen (S114) der Position der RTK-Basisstation (22) mit der Positionierungseinheit mit einem festen Zeitintervall von zwischen 5 bis 15 Sekunden durchgeführt wird.

4. Verfahren nach einem der vorstehenden Ansprüche, wobei das Bestimmen (S100) der Position des Mähroboters (2) mit der Positionierungseinheit (8) und dem Koppelnavigationssensor (10) mit einer festen Frequenz von 8 bis 12 Hz durchgeführt wird, bevorzugt mit einer festen Frequenz von 10 Hz.

5. Verfahren nach einem der vorstehenden Ansprüche, wobei das Ausführen (S112) des Sicherheitsvorgangs eines von Stoppen der Bewegung des Mähroboters (2), Stoppen der Bewegung des Mähroboters (2) um mehr als eine Länge des Mähroboters (2) außerhalb der Begrenzung und, Rückwärtsfahren oder Drehen des Mähroboters (2) zum Navigieren des Mähroboters (2) in die Richtung von der Begrenzung (6) weg oder einer beliebigen Kombination davon umfasst.

6. Verfahren nach einem der vorstehenden Ansprüche, wobei der Abstand (D) zu der nächstgelegenen Begrenzung (6) der Abstand zwischen der von der Positionierungseinheit (8) bestimmten Position und einem der im Wesentlichen nächstgelegenen Punkte auf der nächstgelegenen Begrenzung (6), dem im Wesentlichen nächstgelegenen Punkt auf der nächstgelegenen Begrenzung (6) in der Mährichtung des Mähroboters (2), und dem im Wesentlichen nächstgelegenen Punkt auf der nächstgelegenen Begrenzung (6), den der Mähroboter (2) auf der Grundlage einer vorab geplanten Trajektorie zu überqueren riskiert, oder einer beliebigen Kombination davon ist.

7. Mähroboter (2) zum Ausführen des Navigierens innerhalb eines Arbeitsbereichs (4), wobei der Arbeitsbereich (4) durch eine Begrenzung (6) begrenzt ist, der Mähroboter (2) umfassend eine Positionierungseinheit (8), einen Koppelnavigationssensor (10), ein Steuergerät (12), umfassend einen Prozessor (14) und einen Speicher (16), wobei der Speicher (16) Anweisungen umfasst, die, wenn sie durch den Prozessor (14) ausgeführt werden, bewirken, dass der Mäher:
wiederholt eine Position des Mähroboters (2) mittels der Positionierungseinheit (8) bestimmt,
den Mähroboter (2) innerhalb des Arbeitsbereichs (4), basierend auf der bestimmten Position navigiert,
bestimmt, dass eine neue Position des Mähroboters (2) nicht genau erhalten werden kann,
einen Positionsunsicherheitsabstand (R), basierend auf den von der Positionierungseinheit (8) und dem Koppelnavigationssensor (10) erhaltenen Positionen, bestimmt,
einen Abstand (D) zu der nächstgelegenen Begrenzung (6) berechnet,
eine Navigationsmarge als die Differenz zwischen dem Abstand (D) zu der nächstgelegenen Begrenzung (6) und dem Positionsunsicherheitsabstand (R) bestimmt, und
einen Sicherheitsvorgang ausführt, wenn die Navigationsmarge einem vorgegebenen Wert entspricht, **dadurch gekennzeichnet, dass** der Mähroboter (2) weiter ausgebildet ist:
- eine Trajektorie (X) der von der Positionierungseinheit (8) bestimmten Positionen (pp1..n) zu erzeugen, während der Mähroboter (2) navigiert,
- eine Trajektorie (Y) der von dem Koppelnavigationssensor (10) bestimmten Positionen (pd1..n) zu erzeugen, während der Mähroboter (2) navigiert,
- auszurichten durch Bewegen mindestens einer der erzeugten Trajektorien (X, Y) innerhalb eines 2D- oder 3D-Koordinatensystems zur Minimierung des Abstands zwischen den Trajektorien (X, Y), was zu ausgerichteten Trajektorien (X, Y') führt,
- eine Differenzmetrik (MOD) zwischen den ausgerichteten Trajektorien (X, Y') zum Quantifizieren der Ausrichtungsqualität der ausgerichteten Trajektorien (X, Y') zu berechnen, und
- den Positionsunsicherheitsabstand (R) als die Differenzmetrik (MOD) zwischen den ausgerichteten Trajektorien (X, Y') zu bestimmen.

8. Mähroboter (2) nach Anspruch 7, wobei die Positionierungseinheit (8) eine von einer **R**eal-**T**ime **K**inematic-, RTK-, Positionierungseinheit, einer **G**lobal **P**ositioning **S**ystem-, GPS-, Positionierungseinheit und einer **D**ifferential **G**lobal **N**avigation **S**atellite **S**ystems-, DGNSS-, Positionierungseinheit oder eine beliebige Kombination davon ist.

9. Mähroboter (2) nach einem der Ansprüche 7 bis 8, wobei der Mähroboter (2) weiter ausgebildet ist:
wiederholt, mit einem festen Zeitintervall zwischen 5 bis 15 Sekunden, eine Position einer RTK-Basisstation (22) mit einer in der RTK-Basisstation (22) vorgesehenen Positionierungseinheit zu bestimmen.

10. Mähroboter (2) nach einem der Ansprüche 7 bis 9, wobei der Mähroboter (2) weiter ausgebildet ist:
die Positionen des Mähroboters (2) mit der Positionierungseinheit (8) und dem Koppelnavigationssensor (10) mit einer festen Frequenz von 8 bis 12 Hz zu bestimmen, bevorzugt mit einer festen Frequenz von 10 Hz.

11. Mähroboter (2) nach einem der Ansprüche 7 bis 10, wobei der Mähroboter (2) weiter ausgebildet ist, den Sicherheitsvorgang als eines von Stoppen der Bewegung des Mähroboters (2), Stoppen der Bewegung des Mähroboters (2) um mehr als eine Länge des Mähroboters (2) außerhalb der Begrenzung, und Rückwärtsfahren oder Drehen des Mähroboters (2) zum Navigieren des Mähroboters (2) in die Richtung von der Begrenzung (6) weg oder eine beliebige Kombination davon auszuführen.

12. Mähroboter (2) nach einem der Ansprüche 7 bis 11, wobei der Abstand (D) zu der nächstgelegenen Begrenzung (6) der Abstand zwischen der von der Positionierungseinheit (8) bestimmten Position und einem der im Wesentlichen nächstgelegenen Punkte auf der nächstgelegenen Begrenzung (6), dem im Wesentlichen nächstgelegenen Punkt auf der nächstgelegenen Begrenzung (6) in der Mährichtung des Mähroboters (2), und dem im Wesentlichen nächstgelegenen Punkt auf der nächstgelegenen Begrenzung (6), den der Mähroboter (2) auf der Grundlage einer vorab geplanten Trajektorie zu überqueren riskiert, oder einer beliebigen Kombination davon ist.

13. Computerprogramm (18), umfassend Computerprogrammcode, wobei der Computerprogrammcode angepasst ist, wenn er durch den Prozessor (14) des Steuergeräts (12) ausgeführt wird, das Verfahren nach einem der Ansprüche 1 bis 6 zu implementieren.

## Revendications

1. Procédé de navigation d'une tondeuse robotique (2) à l'intérieur d'une zone de travail (4), dans lequel la zone de travail (4) est limitée par une limite (6), le procédé consistant à
déterminer de façon répétée (S100) une position de la tondeuse robotique (2) au moyen d'une unité de positionnement (8) prévue dans ou disposée sur la tondeuse robotique (2),
faire naviguer (S102) la tondeuse robotique (2) dans la zone de travail (4) sur la base de la position déterminée,
déterminer (S104) qu'une nouvelle position de la tondeuse robotique (2) ne peut pas être obtenue avec précision,
déterminer (S106) une distance d'incertitude de position (R) sur la base des positions obtenues par l'unité de positionnement (8) et d'un capteur de navigation à l'estime (10) prévu dans la tondeuse robotique (2),
calculer (S108) une distance (D) jusqu'à la limite (6) la plus proche, déterminer (S110) une marge de navigation comme la différence entre la distance (D) jusqu'à la limite (6) la plus proche et la distance d'incertitude de position (R), et
mettre en œuvre (S112) une opération de sécurité si la marge de navigation est égale à une valeur prédéterminée, **caractérisé en ce que** le procédé comprend en outre les étapes consistant à :
- générer (S106.1) une trajectoire (X) des positions (pp1..n) déterminées par l'unité de positionnement (8) pendant que la tondeuse robotique (2) navigue,
- générer (S106.2) une trajectoire (Y) des positions (pd1..n) déterminées par le capteur de navigation à l'estime (10) pendant que la tondeuse robotique (2) navigue,
- effectuer un alignement (S106.3) par le déplacement d'au moins l'une des trajectoires générées (X, Y) dans un système de coordonnées 2D ou 3D pour une réduction au maximum de la distance entre les trajectoires (X, Y) produisant des trajectoires alignées (X, Y'),
- calculer (S106.4) une métrique de différence (MOD) entre les trajectoires alignées (X, Y') pour quantifier la qualité d'alignement des trajectoires alignées (X, Y'), et
- déterminer (S106.5) la distance d'incertitude de position (R) comme la métrique de différence (MOD) entre les trajectoires alignées (X, Y').

2. Procédé selon la revendication 1, dans lequel la position déterminée par l'unité de positionnement (8) est déterminée en utilisant l'une quelconque parmi la **C**inématique en **T**emps **R**éel, RTK, un **S**ystème de **P**ositionnement **G**lobal, GPS, et des **S**ystèmes **S**atellite de **P**oitionnement **G**lobale **D**ifférentiels, DGNSS, ou toute combinaison de ceux-ci.

3. Procédé selon l'une quelconque des revendications précédentes, consistant en outre à déterminer de façon répétée (S114) une position d'une station de base RTK (22) avec une unité de positionnement prévue dans la station de base RTK (22), et dans lequel la détermination (S114) de la position de la station de base RTK (22) avec l'unité de positionnement est effectué avec un intervalle de temps fixe de 5 à 15 secondes.

4. Procédé selon l'une quelconque des revendications précédentes, dans lequel la détermination (S100) de la position de la tondeuse robotique (2) avec l'unité de positionnement (8) et le capteur de navigation à l'estime (10) est effectuée avec une fréquence fixe de 8 à 12 Hz, de préférence avec une fréquence fixe de 10 Hz.

5. Procédé selon l'une quelconque des revendications précédentes, dans lequel la mise en œuvre (S112) de l'opération de sécurité comprend l'une quelconque des actions consistant à arrêter le déplacement de la tondeuse robotique (2), à arrêter le déplacement de la tondeuse robotique (2) à plus d'une longueur de tondeuse robotique (2) à l'extérieur de la limite, et à faire reculer ou tourner la tondeuse robotique (2) pour faire naviguer la tondeuse robotique (2) dans la direction s'éloignant de la limite (6), ou toute combinaison de celles-ci.

6. Procédé selon l'une quelconque des revendications précédentes,
dans lequel la distance (D) jusqu'à la limite (6) la plus proche est la distance entre la position déterminée par l'unité de positionnement (8) et l'un quelconque parmi le point sensiblement le plus proche sur la limite (6) la plus proche,
le point sensiblement le plus proche sur la limite (6) la plus proche dans la direction de tonte de la tondeuse robotique (2), et
le point sensiblement le plus proche sur la limite (6) la plus proche que la tondeuse robotique (2) risque de franchir sur la base d'une trajectoire préplanifiée ou toute combinaison de celles-ci.

7. Tondeuse robotique (2) pour effectuer une navigation à l'intérieur d'une zone de travail (4), dans laquelle la zone de travail (4) est limitée par une limite (6), la tondeuse robotique (2) comprenant une unité de positionnement (8), un capteur de navigation à l'estime (10), une unité de commande (12) comprenant un processeur (14) et une mémoire (16), la mémoire (16) comprenant des instructions qui, lorsqu'elles sont exécutées par le processeur (14), amènent la tondeuse à :
déterminer de façon répétée une position de la tondeuse robotique (2) au moyen de l'unité de positionnement (8),
faire naviguer la tondeuse robotique (2) dans la zone de travail (4) sur la base de la position déterminée,
déterminer qu'une nouvelle position de la tondeuse robotique (2) ne peut pas être obtenue avec précision,
déterminer une distance d'incertitude de position (R) sur la base des positions obtenues par l'unité de positionnement (8) et le capteur de navigation à l'estime (10),
calculer une distance (D) jusqu'à la limite (6) la plus proche,
déterminer une marge de navigation comme la différence entre la distance (D) jusqu'à la limite (6) la plus proche et la distance d'incertitude de position (R), et
mettre en œuvre une opération de sécurité si la marge de navigation est égale à une valeur prédéterminée, **caractérisée en ce que** la tondeuse robotique (2) est en outre configurée pour :
- générer une trajectoire (X) des positions (pp1..n) déterminées par l'unité de positionnement (8) pendant que la tondeuse robotique (2) navigue,
- générer une trajectoire (Y) des positions (pd1..n) déterminées par le capteur de navigation à l'estime (10) pendant que la tondeuse robotique (2) navigue,
- effectuer un alignement par le déplacement d'au moins l'une des trajectoires générées (X, Y) dans un système de coordonnées 2D ou 3D pour une réduction au maximum de la distance entre les trajectoires (X, Y) produisant des trajectoires alignées (X, Y'),
- calculer une métrique de différence (MOD) entre les trajectoires alignées (X, Y') pour quantifier la qualité d'alignement des trajectoires alignées (X, Y'), et
- déterminer la distance d'incertitude de position (R) comme la métrique de différence (MOD) entre les trajectoires alignées (X, Y').

8. Tondeuse robotique (2) selon la revendication 7, dans laquelle l'unité de positionnement (8) est l'une quelconque parmi une unité de positionnement à **C**inématique en **T**emps **R**éel, RTK, une unité de positionnement à **S**ystème de **P**ositionnement **G**lobal, GPS, et une unité de positionnement à **S**ystèmes **S**atellite de **P**ositionnement **G**lobal **D**ifférentiels, DGNSS, ou toute combinaison de celles-ci.

9. Tondeuse robotique (2) selon l'une quelconque des revendications 7 à 8, dans laquelle la tondeuse robotique (2) est en outre configurée pour :
déterminer de façon répétée, avec un intervalle de temps fixe de 5 à 15 secondes, une position d'une station de base RTK (22) avec une unité de positionnement prévue dans la station de base RTK (22).

10. Tondeuse robotique (2) selon l'une quelconque des revendications 7 à 9, dans laquelle la tondeuse robotique (2) est en outre configurée pour :
déterminer les positions de la tondeuse robotique (2) avec l'unité de positionnement (8) et le capteur de navigation à l'estime (10) avec une fréquence fixe de 8 à 12 Hz, de préférence avec une fréquence fixe de 10 Hz.

11. Tondeuse robotique (2) selon l'une quelconque des revendications 7 à 10, dans laquelle la tondeuse robotique (2) est en outre configurée pour mettre en œuvre l'opération de sécurité selon l'une quelconque des actions consistant à arrêter le déplacement de la tondeuse robotique (2), arrêter le déplacement de la tondeuse robotique (2) à plus d'une longueur de tondeuse robotique (2) à l'extérieur de la limite, et faire reculer ou tourner la tondeuse robotique (2) pour faire naviguer la tondeuse robotique (2) dans la direction s'éloignant de la limite (6) ou toute combinaison de celles-ci.

12. Tondeuse robotique (2) selon l'une quelconque des revendications 7 à 11, dans laquelle la distance (D) jusqu'à la limite (6) la plus proche est la distance entre la position déterminée par l'unité de positionnement (8) et l'un quelconque parmi le point sensiblement le plus proche sur la limite (6) la plus proche, le point sensiblement le plus proche sur la limite (6) la plus proche dans la direction de tonte de la tondeuse robotique (2), et le point sensiblement le plus proche sur la limite (6) la plus proche que la tondeuse robotique (2) risque de franchir sur la base d'une trajectoire préplanifiée ou toute combinaison de celles-ci.

13. Programme informatique (18) comprenant un code de programme informatique, le code de programme informatique étant configuré, s'il est exécuté par le processeur (14) de l'unité de commande (12), pour mettre en œuvre le procédé selon l'une quelconque des revendications 1 à 6.
